# EUROPEAN PATENT SPECIFICATION

(11) **EP 1 681 477 B1**
(45) Date of publication and mention of the grant of the patent: **25.06.2008**
(21) Application number: 05028745.7
(22) Date of filing: 30.12.2005
(51) Int. Cl.: F16B 21/18

(54) **Combination of a snap ring with a shaft and a holding member**
Kombination eines Federrings mit einem Schaft und eines Halteelements
Combinaison d'une bague élastique avec un fût et un élément de retenue

(30) Priority: 13.01.2005 JP 2005006336
(43) Date of publication of application: 19.07.2006
(73) Proprietor: Piolax Inc., Yokohama-shi, Kanagawa-ken (JP)
(72) Inventor: Matsumoto, Shinichi Piolax, Inc., Yokohama-shi Kanagawa (JP)
(74) Representative: Grünecker, Kinkeldey, Stockmair & Schwanhäusser Anwaltssozietät

(56) References cited:
- FR-A- 785 957
- FR-A- 1 125 551
- GB-A- 1 223 050

## Description

The invention relates to a combination of a snap ring with a shaft and a holding member for preventing the shaft inserted in a hole of the holding member from disconnecting from and/or rotating with respect to the holding member. A combination of this Kind is known from FR 785.957.

Conventionally, a snap ring is used for preventing a shaft inserted in a hole of a holding member from disconnecting from and/or rotating with respect to the holding member.

Document GB 1223050A teaches a resilient retaining clip, which comprises two projecting end portions that are bent outwardly in one direction for coupling rods or tubes together. A holding member has an engaging groove thereby to fix the retaining clip thereto.

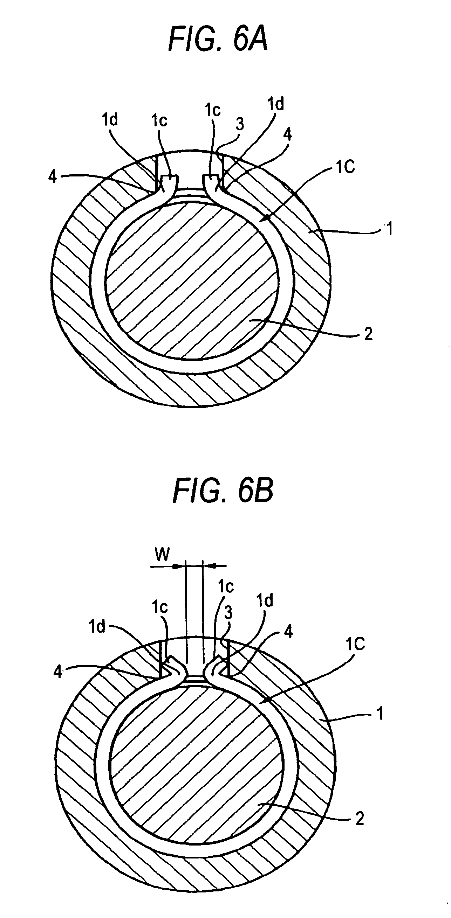

JP Sho.63-142413 U has disclosed a snap ring 1C of the shape shown in Fig. 6A. This snap ring 1C has a circular shape for fitting over an outer periphery of a shaft 2, and has such a shape that its both projecting end portions 1c (distal end portions) are bent toward the outer peripheral side. Further, the bent projecting end portions 1c abut against an engaging groove 3 (notched groove) formed in a holding member 1 (mating member) into which the shaft 2 is inserted, to thereby couple the shaft 2 to the holding member 1 in such a manner as to be prevented from disconnecting from the holding member 1.

As for the above-described snap ring 1c however, as shown in Fig. 6A, arcuately bent portions 1d of the bent projecting end portions 1c are likely to come into contact with corner portions 4 of the engaging groove 3 of the holding member 1. For this reason, the bent portions 1d and the corner portions 4 become worn, and backlash occurs between the shaft 2 and the holding member 1.

To overcome the above-described problem, as shown in Fig. 6B, JP Hei.1-156390 U has disclosed a snap ring 1c in which the radius of the arcuately bent portion 1d of each projecting end portion 1c is made large to ensure that the arcuately bent portion 1d does not come into contact with the corner portion 4 of the engaging groove 3 of the holding member 1.

However, with the snap ring 1C disclosed in JP Hei.1-156390 U, since the interval W between both projecting end portions 1c becomes narrow, the snap ring 1C cannot be closed with both projecting end portions 1c being sufficiently reduced in diameter. For this reason, there have been cases where the snap ring 1C cannot be inserted into a hole defining an inner periphery of the holding member 1.

Accordingly, the invention provides a snap ring in which the shaft inserted in the hole of the holding member can be prevented from disconnecting from and/or rotating with respect to the holding member with small backlash and with an increased engaging force, and which can be easily inserted into the holding member.

To attain the above object, in accordance with a first aspect of the invention, a combination of a snap ring with a shaft and a holding member according to claim 1 is disclosed.

According to this structure, each of the projecting end portions extends radially outwardly via the first bent portion, which is bent inwardly from the circumferential portion, and the second bent portion, which continues from the first bent portion and is bent outwardly. Therefore, the portion extending from the circumferential portion to the projecting end portion does not come into contact with a corner portion of the engaging groove formed in the inner periphery of the holding member into which the shaft is inserted. For this reason, both the corner portions of the engaging groove and the snap ring are made difficult to be worn, and the backlash entailed thereby is also made difficult to occur.

In addition, since the projecting end portions are substantially parallel to each other, the projecting end portions are brought into line contact with the inner periphery of the engaging groove and are held stably, which makes it possible to increase the engaging force.

Furthermore, since the interval between the both projecting end portions can be made wide, when the snap ring is closed, the diameter of the snap ring can be made sufficiently small. Thus, the snap ring can be easily inserted into the inner periphery of the holding member, and workability in assembling the shaft and the holding member is improved.

In accordance with a second aspect of the invention, a combination of a snap ring with a shaft and a holding member according to claim 2 is disclosed.

According to this structure, each of the projecting end portions extends radially inwardly via the first bent portion, which is bent outwardly from the circumferential portion, and the second bent portion, which continues from the first bent portion and is bent inwardly. Therefore, the portion extending from the circumferential portion to the projecting end portion does not come into contact with a corner portion of the engaging groove formed in the outer periphery of the shaft. For this reason, both the corner portions of the engaging groove and the snap ring are made difficult to be worn, and the backlash entailed thereby is also made difficult to occur.

In addition, since the projecting end portions are substantially parallel to each other, the projecting end portions are brought into line contact with the inner periphery of the engaging groove and are held stably, which makes it possible to increase the engaging force.

In accordance with a third aspect of the invention, in the above-described first or second aspect of the invention, the first bent portion and the second bent portion are formed into circular arcs having a substantially identical radius.

According to this structure, it is ensured that the portion extending from the circumferential portion to the projecting end portion is not brought into contact with the corner portion of the engaging groove, and the projecting end portions can be easily extended in parallel to each other.

According to the snap ring of the invention, since each of the projecting end portions extends radially outwardly or inwardly via the first bent portion, which is bent from the circumferential portion, and the second bent portion, which continues from the first bent portion and is bent, the portion extending from the circumferential portion to the projecting end portion does not come into contact with the corner portion of the engaging groove. Thus, both the corner portions of the engaging groove and the snap ring are made difficult to be worn, and the backlash is also made difficult to occur. In addition, since the projecting end portions are substantially parallel to each other, the projecting end portions are brought into line contact with the inner periphery of the engaging groove and are held stably, which makes it possible to increase the engaging force.

Furthermore, according to the first aspect of the invention, since the interval between the both projecting end portions can be made wide, when the snap ring is closed, the diameter of the snap ring can be made sufficiently small. Thus, the snap ring can be easily inserted into the hole defining the inner periphery of the holding member, and the operating efficiency in assembly improves.
Fig. 1 is a perspective view of an embodiment of a snap ring in accordance with the invention, as well as a holding member and a shaft to which it is applied;
Fig. 2 is a plan view of the snap ring;
Figs. 3A and 3B show a case where pipes are connected together by applying the snap ring, in which Fig. 3A is a cross-sectional view of one side thereof, and Fig. 3B is a cross-sectional view taken in the direction of arrows along line D - D in Fig. 3A;
Fig. 4 shows a case where the pipes are connected together by applying the snap ring, and is an enlarged cross-sectional view in which Fig. 3B is rotated 90 degrees clockwise;
Fig. 5 is an enlarged cross-sectional view of another embodiment of the snap ring in accordance with the invention and a case in which pipes are connected together by applying it;
Fig. 6A is a plan view illustrating an example of a conventional snap ring; and
Fig. 6B is a plan view illustrating another example of a conventional snap ring.

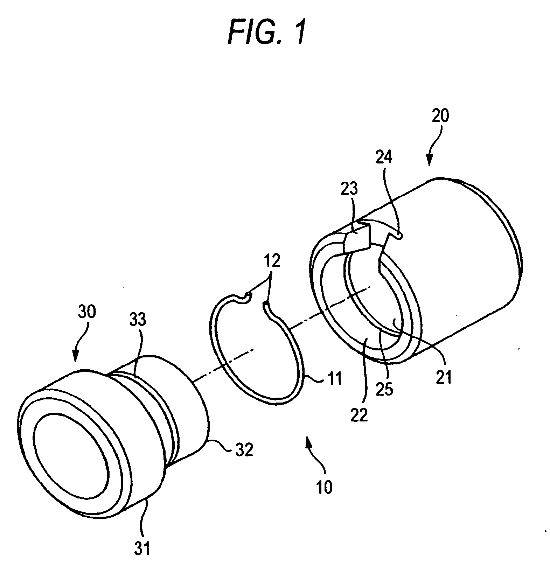

Referring now to Figs. 1 to 4, a description will be given of a snap ring 10 according to an embodiment of the invention.

This snap ring 10 is used at a time when, in an automobile, for example, a shaft is prevented from disconnecting from and/or rotating with respect to a gear, or when a piston pin for coupling a connecting rod and a piston is prevented from disconnecting. Alternatively, this snap ring 10 is used to couple a female member and a male member of a pipe joint as the pipe joint at a time when pipes are connected together.

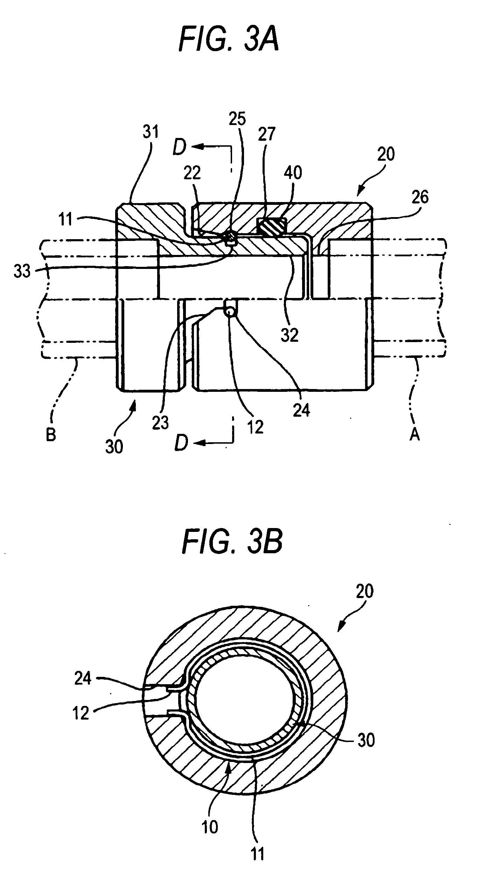

Figs. 1 and 3 show an example in which the snap ring 10 is used as a pipe joint. Namely, an example is shown in which a holding member 20 (functioning as a female member) and a shaft 30 (functioning as a male member), which is inserted into the female member, are coupled together by using the snap ring 10 so as to connect pipes.

The holding member 20 has a substantially tubular shape, and a hole 21 is formed therein with such an inner diameter that the shaft 30 can be inserted therein. A tapered portion 22 whose diameter is gradually reduced is formed in such a manner as to extend from one end face thereof along an axial direction. A notch 23 is formed in a circumferential portion in such a manner as to extend from the end face thereof along the axial direction. This notch 23 has a tapered shape, which expands toward the end face along the axial direction, and an engaging groove 24 extending along the circumferential direction is formed on an inner side of the notch 23. Further, a concave groove 25 for fitting the snap ring 10 is formed along an inner periphery of the hole 21 in alignment with the position of the engaging groove 24. In addition, an annular rib 26 projecting radially inwardly is formed on the inner periphery of the hole 21, and serves to position the shaft 30 when it is inserted. Further, an annular groove 27 is formed in the inner periphery of the hole 21, and a seal ring 40 is fitted in this annular groove 27 and ensures sealability at the time of coupling with the shaft 30. Then, a pipe A is inserted so as to abut against the rib 26 of the holding member 20.

The shaft 30, which is inserted in the hole 21 of the holding member 20, has a large-diameter hollow cylindrical portion 31 and a small-diameter hollow cylindrical portion 32 whose diameter is slightly smaller than the large-diameter hollow cylindrical portion 31 and which extends in the axial direction. A concave groove 33 in which the snap ring 10 is fitted is provided in an outer periphery of the small-diameter hollow cylindrical portion 32. In addition, a pipe B is inserted into an enlarged-diameter inner periphery of the large-diameter hollow cylindrical portion 31.

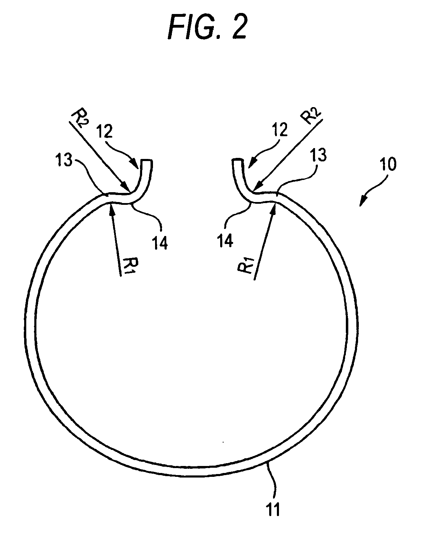

As shown in Fig. 2, the snap ring 10 is integrally made of a spring wire. The snap ring 10 has a circumferential portion 11 and a pair of projecting end portions 12. The circumferential portion 11 is curved in a circular shape fitting the concave groove 33 formed in the outer periphery of the shaft 30 or the concave groove 25 formed in the inner periphery of the holding member 20. The pair of projecting end portions 12 extend substantially in parallel to each other from both ends of this circumferential portion 11 with being bent radially outwardly. The pair of projecting end portions 12 are inserted in the engaging groove 24 of the holding member 20.

In addition, each of the projecting end portions 12 extends radially outwardly via a first bent portion 13, which is bent inwardly from the circumferential portion 11, and a second bent portion 14, which continues from the first bent portion 13 and is bent outwardly.

It should be noted that the first bent portion 13 is bent with a circular arc of a radius R₁ having a center on the inward side, while the second bent portion 14 is bent with a circular arc of a radius R₂ having a center on the outward side. In this embodiment, the radius R₁ of the first bent portion 13 and the radius R₂ of the second bent portion 14 are substantially equal to each other.

Next, a description will be given of a method of using the snap ring 10 according to this embodiment of the invention as well as its operation.

First, the pipes A and B are respectively inserted in advance into the inner peripheries of the holding member 20 and the shaft 30 by such means as press fitting such that the pipes A and B do not disconnect. Then, the snap ring 10 is fitted to the shaft 30. Namely, the projecting end portions 12 of the snap ring 10 are outwardly deflected and widened, and then, the snap ring 10 is fitted in the concave groove 33 of the shaft 30, to thereby attach the snap ring 10 on the outer periphery of the shaft 30.

Next, the small-diameter hollow cylindrical portion 32 of the shaft 30 is inserted into the hole 21 of the holding member 20. At this time, the projecting end portions 12 of the snap ring 10 are pushed in in alignment with the notch 23 of the shaft 30. Then, the circumferential portion 11 of the snap ring 10 is inwardly deflected by being pressed by the tapered portion 22, and the projecting end portions 12 are inwardly deflected by being pressed by the notch 23.

Then, when the circumferential portion 11 reaches the concave groove 25 of the holding member 20 and the projecting end portions 12 reach the engaging groove 24, these portions are resiliently restored, such that the circumferential portion 11 is fitted into the concave groove 25, and the projecting end portions 12 are engaged with the inner periphery of the engaging groove 24. As a result, the shaft 30 is coupled to the holding member 20 with being prevented from disconnecting from the holding member 20. At the same time, the pipes A and B are connected together (see Figs. 3A and 3B).

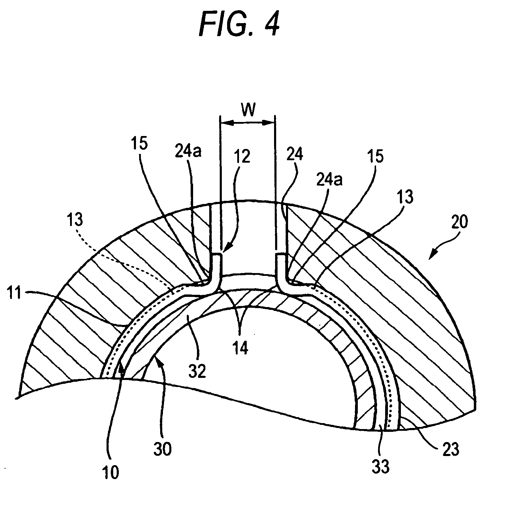

Fig. 4 shows the state of the snap ring 10 when the holding member 20 and the shaft 30 are connected together. In this case, as for the snap ring 10, since each of the projecting end portions 12 extends radially outwardly via the first bent portion 13, which is bent inwardly from the circumferential portion 11, and the second bent portion 14, which continues from the first bent portion 13 and is bent outwardly, a portion 15 extending from the circumferential portion 11 to the projecting end portion 12 does not come into contact with a corner portion 24a of the engaging groove 24 of the holding member 20. For this reason, both the corner portions 24a of the engaging groove 24 and the snap ring 10 are made difficult to be worn, and the backlash entailed by the wear is also made difficult to occur.

In addition, since the projecting end portions 12 are substantially parallel to each other, the projecting end portions 12 are brought into line contact with the inner periphery of the engaging groove 24 and are held stably, which makes it possible to increase the engaging force.

Furthermore, since the interval W between the both projecting end portions 12 can be made wide, when the snap ring 10 is closed, the diameter of the snap ring 10 can be made sufficiently small. Thus, the snap ring 10 can be easily inserted into the inner periphery of the holding member 20, and workability in assembling the shaft 30 and the holding member 20 can be improved.

In addition, since the radius R₁ of the first bent portion 13 and the radius R₂ of the second bent portion 14 are substantially equal to each other, the portion 15 extending from the circumferential portion 11 to the projecting end portion 12 can be made not to come into contact with the corner portion 24a of the engaging groove 24, and the projecting end portions 12 can be easily extended in parallel to each other.

It should be noted that although the shaft 30 is not provided with a detent with respect to the holding member 20, a detent means may be formed on the shaft 30 or the holding member 20 to provide a detent.

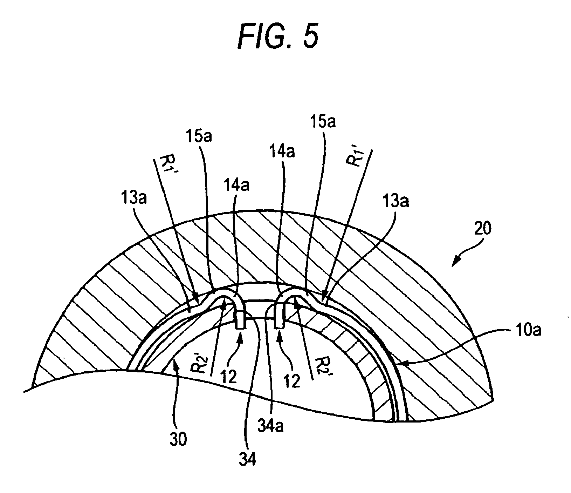

Fig. 5 shows the snap ring 10 according to another embodiment of the invention.

A snap ring 10a of this embodiment differs from that of the above-described embodiment in that projecting end portions 12a extend in the opposite direction to that of the above-described embodiment, and in that an unillustrated notch is formed in a shaft 30a in such a manner as to extend from its end face along the axial direction, and in that an engaging groove 34 is formed in the innermost recess of this notch, while the notch 22 and the engaging groove 24 are not formed in the holding member 20.

Further, the snap ring 10a is integrally made of a spring wire. The snap spring 10a has the circumferential portion 11 and the pair of projecting end portions 12a. The circumferential portion 11 is curved in a circular shape fitting to the concave groove 33 formed in the outer periphery of the shaft 30 or the concave groove 25 formed in the inner periphery of the holding member 20. The pair of projecting end portions 12a extend substantially in parallel to each other from both ends of this circumferential portion 11 with being bent radially inwardly. The pair of projecting end portions 12a are inserted in the unillustrated engaging groove of the shaft 30.

In addition, each of the projecting end portions 12a extends radially inwardly via a first bent portion 13a, which is bent outwardly from the circumferential portion 11, and a second bent portion 14a, which continues from the first bent portion 13a and is bent inwardly.

It should be noted that the first bent portion 13a is bent with a circular arc of a radius R₁' having a center on the outward side, while the second bent portion 14a is bent with a circular arc of a radius R₂' having a center on the inward side. In this embodiment, the radius R₁' of the first bent portion 13a and the radius R₂' of the second bent portion 14a are substantially equal to each other.

The above-described snap ring 10a is used as follows.

The pipes A and B are respectively inserted in advance into the holding member 20 and the shaft 30 by such means as press fitting, and the snap ring 10a is fitted to the shaft 30. Namely, the projecting end portions 12a of the snap ring 10a are outwardly widened, the circumferential portion 11 is fitted in the concave groove 33, and the projecting end portions 12a are engaged with the inner periphery of the engaging groove 34, to thereby attach the snap ring 10a on the outer periphery of the shaft 30.

Next, if the shaft 30 is inserted into the hole 21 of the holding member 20, the circumferential portion 11 and the projecting end portions 12a of the snap ring 10a are pressed by the tapered portion 22 and are inwardly deflected. Then, upon reaching the concave groove 25 of the holding member 20, the circumferential portion 11 and the projecting end portions 12a are resiliently restored and are respectively fitted in the Concave groove 25 and the engaging groove 34. As a result, the shaft 30 is coupled to the holding member 20 in such a manner as to be prevented from disconnecting from the holding member 20. At the same time, the pipes A and B are connected together.

In this case as well, as shown in Fig. 5, since each of the projecting end portions 12a extends radially inwardly via the first bent portion 13a, which is bent outwardly from the circumferential portion 11, and the second bent portion 14a which continues from the first bent portion 13a and is bent inwardly, a portion 15a extending from the circumferential portion 11 to the projecting end portion 12a does not come into contact with a corner portion 34a of the engaging groove 34 of the shaft 30. For this reason, both the corner portions 34a of the engaging groove 34 and the snap ring 10a are made difficult to be worn, and the backlash entailed thereby is also made difficult to occur.

In addition, since the projecting end portions 12a are substantially parallel to each other, the projecting end portions 12a are brought into line contact with the inner periphery of the engaging groove 34 and are held stably, which makes it possible to increase the engaging force.

The snap ring according to the invention can be used as one in which the shaft inserted in the hole of the holding member can be prevented from disconnecting from and/or rotating with respect to the holding member with small backlash and with an increased engaging force.

## Claims

1. Combination of a snap ring (10) with a shaft (30) and a holding member (20) for preventing the shaft (30) inserted in a hole (21) of the holding member (20) from disconnecting from and/or rotating with respect to the holding member (20), the snap ring (10) comprising:
a circumferential portion (11), which is curved in a circular shape fitting an outer periphery of the shaft (30) or an inner periphery of the hole (21) of the holding member (20);
a pair of projecting end portions (12), which extend substantially in parallel to each other from both ends of the circumferential portion (11) and are bent radially outwardly, the projecting end portions (12) being insertable in an engaging groove (24) formed in the inner periphery of the hole (21), the engaging groove (24) comprising corner portions (24a), and the circumferential portion (11) and the pair of projecting end portions (12) being made of a spring wire,
**characterized in that**
each of the pair of projecting end portions (12) extends radially outwardly via a first bent portion (13), which is bent inwardly from the circumferential portion, and a second bent portion (14), which continues from the first bent portion (13) and is bent outwardly, so that a portion (15) extending from the circumferential portion (11) to the projecting end portion (12) does not come into contact with the corner portion (24a) of the engaging groove (24).

2. Combination of a snap ring (10a) with a shaft (30) and a holding member (20) for preventing the shaft (30) inserted in a hole (21) of the holding member (20) from disconnecting from and/or rotating with respect to the holding member (20), the snap ring (10a) comprising:
a circumferential portion (11), which is curved in a circular shape fitting an outer periphery of the shaft (30) or an inner periphery of the hole (21) of the holding member (20);
**characterized in that**
a pair of projecting end portions (12), which extend substantially in parallel to each other from both ends of the circumferential portion (11) and are bent radially inwardly, the projecting end portions (12) are insertable in an engaging groove (34) formed in the outer periphery of the shaft (30), the engaging groove (34) comprises corner portions (34a), and the circumferential portion (11) and the pair of projecting end portions (12) being made of a spring wire,
each of the pair of projecting end portions (12) extends radially inwardly via a first bent portion (13a), which is bent outwardly from the circumferential portion (11), and a second bent portion (14a), which continues from the first bent portion (13a) and is bent inwardly, so that a portion (15a) extending from the circumferential portion (11) to the projecting end portion (12a) does not come into contact with the corner portion (34a) of the engaging groove (34).

3. The combination with the snap ring (10, 10a) according to claim 1 or 2, wherein the first bent portion (13, 13a) and the second bent portion (14, 14a) are formed into circular arcs having a substantially identical radius (R₁, R₂).

## Patentansprüche

1. Kombination eines Federrings (10) mit einem Schaft (30) und einem Halteelement (20), um ein Lösen und/oder Verdrehen des Schafts (30) in Bezug zu dem Halteelement (20) zu verhindern, wenn der Schaft (30) in eine Bohrung (21) des Halteelements (20) eingeführt ist, der Federring (10) weist Folgendes auf:
einen Umfangsabschnitt (11), der kreisförmig gebogen ist und entweder an einem äußeren Umfang des Schafts (30) oder an einem inneren Umfang der Bohrung (21) des Halteelements (20) anliegt;
ein Paar vorstehende Endabschnitte (12), welche sich im Wesentlichen parallel von den beiden Enden des Umfangsabschnitts (11) erstrecken und radial nach außen gebogen sind, die vorstehenden Endabschnitte (12) sind in eine Einrastnut (24) einsetzbar, die in dem inneren Umfang der Bohrung (21) geformt ist, die Einrastnut (24) beinhaltet Eckabschnitte (24a), und der Umfangsabschnitt (11) und das Paar vorstehender Endabschnitte (12) sind aus einem Federdraht gefertigt,
**dadurch gekennzeichnet, dass**
sich jeder vorstehende Endabschnitt (12) radial nach außen über einen ersten Biegeabschnitt (13), welcher von dem Umfangsabschnitt (11) ausgehend nach innen gebogen ist, erstreckt, und ein zweiter Biegeabschnitt (14), der an den ersten Biegeabschnitt (13) anschließt nach außen gebogen ist, so dass ein Abschnitt (15), der sich von dem Umfangsabschnitt (11) zu dem vorstehenden Endabschnitt (12) erstreckt, nicht mit dem Eckabschnitt (24a) der Einrastnut (24) in Kontakt kommt.

2. Kombination eines Federrings (10a) mit einem Schaft (30) und einem Halteelement (20), um ein Lösen und/oder Verdrehen des Schafts (30) in Bezug zu dem Halteelement (20) zu verhindern, wenn der Schaft (30) in eine Bohrung (21) des Halteelements (20) eingeführt ist, der Federring (10a) weist Folgendes auf:
einen Umfangsabschnitt (11), der kreisförmig gebogen ist und entweder an einem äußeren Umfang des Schafts (30) oder an einem inneren Umfang der Bohrung (21) des Halteelements (20) anliegt;
**dadurch gekennzeichnet, dass**
ein Paar vorstehende Endabschnitte (12), welche sich im Wesentlichen parallel von den beiden Enden des Umfangsabschnitts (11) erstrecken und radial nach innen gebogen sind, die vorstehenden Endabschnitte (12) sind in eine Einrastnut (34) einsetzbar, die in dem äußeren Umfang des Schafts (30) geformt ist, die Einrastnut (34) beinhaltet Eckabschnitte (34a), und der Umfangsabschnitt (11) und das Paar vorstehender Endabschnitte (12) sind aus einem Federdraht gefertigt,
sich jeder vorstehende Endabschnitt (12) radial nach innen über einen ersten Biegeabschnitt (13a), welcher von dem Umfangsabschnitt (11) ausgehend nach außen gebogen ist, erstreckt und ein zweiter Biegeabschnitt (14a), der an den ersten Biegeabschnitt (13a) anschließt nach innen gebogen ist, so dass ein Abschnitt (15a), der sich von dem Umfangsabschnitt (11) zu dem vorstehenden Endabschnitt (12a) erstreckt, nicht mit dem Eckabschnitt (34a) der Einrastnut (34) in Kontakt kommt.

3. Die Kombination mit dem Federring (10, 10a) gemäß einem der Ansprüche 1 oder 2, wobei der erste Biegeabschnitt (13, 13a) und der zweite Biegeabschnitt (14, 14a) als kreisförmige Bögen geformt sind, mit im Wesentlichen identischen Radien (R₁, R₂).

## Revendications

1. Combinaison d'un anneau élastique (10) avec un arbre (30) et un élément de maintien (20) afin d'empêcher l'arbre (30) inséré dans un trou (21) de l'élément de maintien (20) de se déconnecter de et/ou de tourner par rapport à l'élément de maintien (20), l'anneau élastique (10) comportant :
une partie circonférentielle (11), qui est courbée en une forme circulaire correspondant à une périphérie extérieure de l'arbre (30) ou une périphérie intérieure du trou (21) de l'élément de maintien (20) ;
une paire de parties d'extrémité saillantes (12), qui s'étendent d'une manière sensiblement parallèle l'une à l'autre depuis les deux extrémités de la partie circonférentielle (11) et sont pliées radialement vers l'extérieur, les parties d'extrémité saillantes (12) pouvant être insérées dans une rainure d'engagement (24) formée dans une périphérie intérieure du trou (21), la rainure d'engagement (24) comportant des parties de coin (24a), et la partie circonférentielle (11) et la paire de parties d'extrémité saillantes (12) étant fabriquées en fil à ressort,
**caractérisée en ce que**
chaque partie de la paire de parties d'extrémité saillantes (12) s'étend radialement vers l'extérieur par l'intermédiaire d'une première partie pliée (13), qui est pliée vers l'intérieur par rapport à la partie circonférentielle, et d'une deuxième partie pliée (14), qui prolonge la première partie pliée (13) et est pliée vers l'extérieur, de telle sorte qu'une partie (15) s'étendant depuis la partie circonférentielle (11) jusqu'à la partie d'extrémité saillante (12) ne vient pas en contact avec la partie de coin (24a) de la rainure d'engagement (24).

2. Combinaison d'un anneau élastique (10a) avec un arbre (30) et un élément de maintien (20) afin d'empêcher l'arbre (30) inséré dans un trou (21) de l'élément de maintien (20) de se déconnecter de et/ou de tourner par rapport à l'élément de maintien (20), l'anneau élastique (10a) comportant :
une partie circonférentielle (11), qui est courbée en une forme circulaire correspondant à une périphérie extérieure de l'arbre (30) ou une périphérie intérieure du trou (21) de l'élément de maintien (20) ;
**caractérisée en ce que**
une paire de parties d'extrémité saillantes (12), qui s'étendent d'une manière sensiblement parallèle l'une à l'autre depuis les deux extrémités de la partie circonférentielle (11) et sont pliées radialement vers l'intérieur, les parties d'extrémité saillantes (12) pouvant être insérées dans une rainure d'engagement (34) formée dans une périphérie intérieure de l'arbre (30), la rainure d'engagement (34) comporte des parties de coin (34a), et la partie circonférentielle (11) et la paire de parties d'extrémité saillantes (12) étant fabriquées en fil à ressort,
chaque partie de la paire de parties d'extrémité saillantes (12) s'étend radialement vers l'intérieur par l'intermédiaire d'une première partie pliée (13a), qui est pliée vers l'extérieur par rapport à la partie circonférentielle (11), et d'une deuxième partie pliée (14a), qui prolonge la première partie pliée (13a) et est pliée vers l'intérieur, de telle sorte qu'une partie (15a) s'étendant depuis la partie circonférentielle (11) jusqu'à la partie d'extrémité saillante (12a) ne vient pas en contact avec la partie de coin (34a) de la rainure d'engagement (34).

3. Combinaison avec l'anneau élastique (10, 10a) selon la revendication 1 ou 2, dans laquelle la première partie pliée (13, 13a) et la deuxième partie pliée (14, 14a) sont formées en arcs de cercle ayant un rayon sensiblement identique (R₁, R₂).
